# EUROPEAN PATENT APPLICATION

(11) **EP 2 899 956 A1**
(43) Date of publication of application: **29.07.2015**
(21) Application number: 14814728.3
(22) Date of filing: 24.01.2014
(51) Int. Cl.: H04M 1/725

(54) **TERMINAL PAIRING METHOD, TERMINAL AND SYSTEM**

(30) Priority: 14.11.2013 CN 201310568068
(71) Applicant: Shenzhen Skyworth Digital Technology Co. Ltd., Shenzhen, Guangdong 518000 (CN); Shenzhen Skyworth Software Co. Ltd., Shenzhen, Guangdong 518057 (CN)
(72) Inventor: LI, Xueping, Shenzhen, Guangdong 518000 (CN); LI, Bin, Shenzhen, Guangdong 518000 (CN); WANG, Xiaohui, Shenzhen, Guangdong 518000 (CN)
(74) Representative: Johnson, Richard Alan
(86) International application number: PCT/CN2014/071343
(87) International publication number: WO 2015/070540

(57) **Abstract**

A terminal matching method, a terminal and a system are provided, the method includes: a first terminal receiving a matching request with a data packet sent from a second terminal, wherein, the data packet includes identity information of a target terminal and identity information of the second terminal, and the identity information of the target terminal can be obtained by scanning identity two-dimension codes of the target terminal by the second terminal; the first terminal generating matching two-dimension codes according to the data packet to make the second terminal analyze the matching two-dimension codes if the identity information of the target terminal is the identity information of the first terminal; and the first terminal obtaining a matching end command transmitted from the second terminal, wherein the matching end command is an instruction that is generated by the second terminal based on the matching two-dimension codes which have been analyzed.

## Description

### CROSS REFERENCE TO RELATED APPLICATIONS

The present application claims the benefit of priority to China patent application NO. 201310568068.5 filed in the Chinese Patent Office on November 14, 2013 and entitled "TERMINAL MATCHING METHOD, TERMINAL AND SYSTEM", the content of which is hereby incorporated by reference in its entirety.

### FIELD OF THE TECHNICAL

The present disclosure relates to communication technology fields, and more specifically, to a terminal matching method, a terminal and a system.

### BACKGROUND

With the more and more diversification of functions of electronic service terminals, some functions should be performed between two or more than two terminals, that is, a terminal needs to communicate with other terminal(s) to achieve the function based on the demands of a user. Thus, many terminal have matching function to match other terminals, after a mobile terminal matches a designated terminal, the user can control the designated terminal through the mobile terminal. In the existing technology, when a mobile terminal needs to match with the designated terminal, it is necessary for the designated terminal to intercommunicate with the mobile terminal many times in order to service for the mobile terminal, which will result in too frequent communications, and having a low matching efficiency, and not conducive for the designated terminal to service for the mobile terminal.

### SUMMARY

A terminal matching method, a terminal and a system are provided in the embodiments of the present disclosure, which can quickly match a terminal with a designated terminal by use of two-dimensional codes.

A first aspect of the present disclosure provides a terminal matching method, the method includes:
a first terminal receiving a matching request that carries a data packet sent from a second terminal, wherein, the data packet includes identity information of a target terminal and identity information of the second terminal, and the identity information of the target terminal is obtained by means of scanning identity two-dimension codes of the target terminal by the second terminal;
the first terminal generating matching two-dimension codes according to the data packet to make the second terminal scan and analyze the matching two-dimension codes if the first terminal identifies that the identity information of the target terminal is the identity information of the first terminal; and
the first terminal obtaining a matching end command transmitted from the second terminal to accept a control operation of the second terminal, wherein the matching end command is an instruction that is generated by the second terminal based on the matching two-dimension codes which have been analyzed.

In a first possible implementation of the first aspect of the present disclosure, the step that if the first terminal identifies that the identity information of the target terminal is the identity information of the first terminal, includes:
the first terminal analyzing the data packet and extracting identity information of a target terminal;
the first terminal determining whether the identity information of the target terminal is the identity information of the first terminal or not; and
the first terminal extracting the identity information of the second terminal from the data packet if the identity information of the target terminal is the identity information of the first terminal.

In a second possible implementation of the first aspect of the present disclosure, the step of the first terminal generating matching two-dimension codes according to the data packet, includes:
the first terminal generating corresponding matching two-dimension codes according to the identity information of the first terminal and the second terminal and matching result information.

In a third possible implementation of the first aspect of the present disclosure, the step of the first terminal generating corresponding matching two-dimension codes according to the identity information of the first terminal and the second terminal and matching result information, includes:
the first terminal determining whether the second terminal is legal or not;
the first terminal determining whether the first terminal stores a matching record which records the first terminal used to match the second terminal if the second terminal can match the first terminal; and
the first terminal storing the identity information of the second terminal and generating corresponding matching two-dimension codes according to the identity information of the first terminal and the second terminal and matching result information if the first terminal does not stores the matching record that records the first terminal used to match with the second terminal.

A second aspect of the present disclosure provides a terminal, the terminal includes:
a receiving module, configured to receive a matching request that carries a data packet sent from a second terminal, wherein, the data packet includes identity information of a target terminal and identity information of the second terminal, and the identity information of the target terminal is obtained by means of scanning identity two-dimension codes of the target terminal by the second terminal;
a generating module, configured to generate matching two-dimension codes according to the data packet to make the second terminal scan and analyze the matching two-dimension codes if the identity information of the target terminal is identified to be the identity information of the first terminal; and
a operation module, configured to obtain a matching end command transmitted from the second terminal to accept a control operation of the second terminal, wherein the matching end command is an instruction that is generated by the second terminal based on the matching two-dimension codes which have been analyzed.

In a first possible implementation of the second aspect of the present disclosure, the generating module includes:
a first extraction unit, configured to analyze the data packet and extract the identity information of the target terminal;
a first determining unit, configured to determine whether the identity information of the target terminal is the identity information of the first terminal or not; and
a second extraction unit, configured to extract the identity information of the second terminal from the data packet when the first determining unit determines that the identity information of the target terminal is the identity information of the first terminal.

In a second possible implementation of the second aspect of the present disclosure, the generating module further includes:
a generating unit, configured to generate corresponding matching two-dimension codes according to the identity information of the first terminal and the second terminal and matching result information, wherein, the matching result information is matching success information or matching failure information.

In a third possible implementation of the second aspect of the present disclosure, the generating unit includes:
a second determining sub-unit, configured to determine whether the second terminal is legal or not.
a third determining sub-unit, configured to determine whether the first terminal stores a matching record which records the first terminal used to match the second terminal when the second determining sub-unit determines that the second terminal can match the first terminal; and
a two-dimension code generating sub-unit, configured to, when the second terminal does not match the first terminal, store the identity information of the second terminal and generate corresponding matching two-dimension codes according to the identity information of the first terminal and the second terminal and matching result information.

A third aspect of the present disclosure provides a matching system, the matching system includes: a first terminal and a second terminal;
the first terminal, configured to receive a matching request that carries a data packet sent from the second terminal, and generate matching two-dimension codes according to the data packet to make the second terminal scan and analyze the matching two-dimension codes if the first terminal determines that the identity information of the target terminal is the identity information of the first terminal, and obtain a matching end command transmitted from the second terminal to accept a control operation of the second terminal, wherein, the data packet includes identity information of a target terminal and identity information of the second terminal, and the identity information of the target terminal is obtained by means of scanning identity two-dimension codes of the target terminal by the second terminal, the matching end command is an instruction that is generated by the second terminal based on the matching two-dimension codes which have been analyzed; and
the second terminal, configured to scan the identity two-dimension codes of the first terminal to obtain the identity information of the first terminal, and transmit the matching request that carries the data packet to the first terminal, and scan and analyze the matching two-dimension codes generated by the first terminal according to the data packet, and transmit a matching end command to the first terminal, wherein, the data packet includes the identity information of the first terminal and the second terminal, and the matching end commend is generated according to the matching two-dimension codes which have been analyzed.

In a first possible implementation of the third aspect of the present disclosure, the first terminal further configured to analyze the data packet and extract the identity information of the target terminal, and determine whether the identity information of the target terminal is the identity information of the first terminal, and extract the identity information of the second terminal from the data packet if the identity information of the target terminal is the identity information of the first terminal, and generate the matching two-dimension codes according to the identity information of the first terminal and the second terminal and matching result information.

By using the embodiments of the present disclosure, the second terminal can scan the identity two-dimension codes of the first terminal to obtain the identity information of the first terminal, and package the identity information of the first terminal and the second terminal into the corresponding data packet, and send the data packet to the first terminal. The first terminal then verifies the data packet to generate the corresponding matching two-dimension codes, making the second terminal scan and analyze the matching two-dimension. The second terminal can scan the matching two-dimension codes of the first terminal to obtain the corresponding matching data. The second terminal then send the matching end command to the first terminal to prompt the first terminal that the current matching operation is end. Thus, the terminal matching method of the present disclosure can make the second terminal match the first terminal more quickly, not only reduce the intercommunication times between the first terminal and the second terminal, but also improve the matching efficiency between the first terminal and the second terminal.

### BRIEF DESCRIPTION OF THE DRAWINGS

In order to illustrate the embodiments or existing technical solutions more clearly, a brief description of drawings that assists the description of embodiments of the disclosure or existing art will be provided below. It would be apparent that the drawings in the following description are only for some of the embodiments of the disclosure. A person having ordinary skills in the art will be able to obtain other drawings on the basis of these drawings without paying any creative work.
FIG. 1 is a flowchart of a terminal matching method according to one embodiment of the present disclosure;
FIG. 2 is a flowchart of a terminal matching method according to another embodiment of the present disclosure;
FIG. 3 is a block diagram of a terminal according to one embodiment of the present disclosure;
FIG. 4 is a block diagram of a generating module of the terminal according to one embodiment of the present disclosure;
FIG. 5 is a block diagram of a generating unit of the generating module of the terminal according to one embodiment of the present disclosure; and
FIG. 6 is a block diagram of a matching system according to one embodiment of the present disclosure.

### DETAILED DESCRIPTION OF ILLUSTRATED EMBODIMENTS

Technical solutions in embodiments of the present disclosure will be illustrated clearly and entirely with the aid of the drawings in the embodiments of the disclosure. It is apparent that the illustrated embodiments are only some embodiments of the disclosure instead of all of them. Other embodiments that a person having ordinary skills in the art obtains based on the illustrated embodiments of the disclosure without paying any creative work should all be within the protection scope sought by the present disclosure.

By using the embodiments of the present disclosure, a terminal and a designated terminal can be quickly matched with each other.

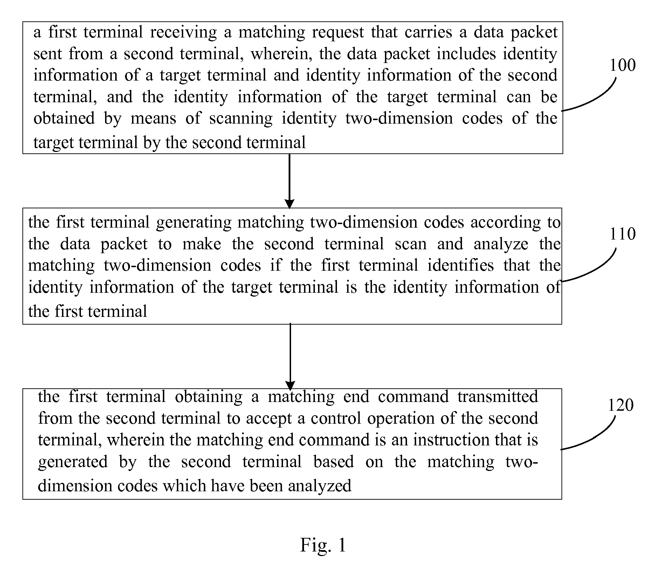

Referring to FIG. 1, FIG. 1 is a flowchart of a terminal matching method according to one embodiment of the present disclosure. A first terminal in the embodiments of the present disclosure can be, but not limited to, a smart television, a video player, a set-top box or other networking terminal devices, which has the function of generating two-dimension codes. Wherein, the first terminal can include: an interaction module and a background service module, the interaction module is configured to receive and send information, and the background service module is configured to verify the information and generate the two-dimension codes. As one embodiment of the present disclosure, the interaction module and the background service module can also be two separate devices, and the background service module and a second terminal can communicate with each other through the interaction module to achieve information interaction between the first terminal and the second terminal, so that the first terminal can match with the second terminal, that is, the background service module can interact with the second terminal through the interaction module to make the first terminal match the second terminal. The second terminal can be a networking mobile device which can identify the two-dimension codes.

As shown in FIG. 1, the terminal matching method in the embodiment of the present disclosure can include steps as follows.

In step 100, a first terminal receiving a matching request that carries a data packet sent from a second terminal, wherein, the data packet includes identity information of a target terminal and identity information of the second terminal, and the identity information of the target terminal can be obtained by means of scanning identity two-dimension codes of the target terminal by the second terminal.

When the second terminal is going to match the first terminal, then the second terminal can scan the identity two-dimension codes that can identify the first terminal, so as to obtain the identity information of the first terminal.

As a practical embodiment of the present disclosure, the second terminal can package the identity information of the first terminal and the second terminal into the data packet according to a user datagram protocol (UDP), the UDP is a connectionless transport layer protocol of the reference model of open system interconnection (OSI). The main function of the UPD is used to compress network data flow into the data packet (i.e., a UDP data packet). Since the UDP does not belong to the protocol of connection type (i.e., the UDP belongs to the connectionless protocol), so the UDP usually consumes less resource and has the advantages of fast processing speed, therefore, audios and videos and other common data usually use the UDP more than other protocols. After the identity information of the first terminal and the second terminal is packaged into the data packet according to the UDP, the second terminal transmits the matching request that carries the data packet to the first terminal in a local area network according to a Socket protocol. The Socket protocol can also be called the socket, and application programs usually send requests to networks or respond to requests from the networks. Socket is designed to the client or the server model and provides different Socket system calls for the client and the server program. The UDP socket can be created according to a Socket() function, and different hosts can send and receive the information through a socket descriptor. Ports of a target terminal box that are used to send the data can be designated when writing the data, so that the data can be transmitted to multiple terminals by using just one socket.

In step 110, the first terminal generating matching two-dimension codes according to the data packet to make the second terminal scan and analyze the matching two-dimension codes if the first terminal identifies that the identity information of the target terminal is the identity information of the first terminal.

In a specific implementation, after the first terminal receives the matching request with the data packet, the first terminal unpacks the data packet and determines the identity information of the target terminal. If the identity information of the target terminal is the same as the identity information of the first terminal, then the identity information of the second terminal can be extracted from the data packet. The background service module verifies the identity information of the second terminal, and generates the matching two-dimension codes, and transmits the matching two-dimension codes to the interaction module, then the second terminal can scan the matching two-dimension codes of the first terminal so as to obtain corresponding matching data.

In step 120, the first terminal obtaining a matching end command transmitted from the second terminal to accept a control operation of the second terminal, wherein the matching end command is an instruction that is generated by the second terminal based on the matching two-dimension codes which have been analyzed.

In a specific implementation, the second terminal scans the matching two-dimension codes of the first terminal so as to obtain corresponding matching data. The second terminal stores the matching data so as to inform the user that has matched with the first terminal when the second terminal needs to match the first terminal next time, and generates the corresponding matching end command based on the matching data. If the matching end command is a matching success command, that is, the second terminal has successfully matched the second terminal, then the first terminal receives the matching success command and resets, and accepts the control operation of the second terminal. If the matching end command is a matching failure command, that is, the second terminal fails to match with the first terminal, the first terminal receives the matching failure command and discards the data packet that has been received previous, and restores the original working condition.

By using the terminal matching method as shown in FIG. 1 of the embodiment, the second terminal can scan the identity two-dimension codes of the first terminal to obtain the identity information of the first terminal, and package the identity information of the first terminal and the second terminal into the corresponding data packet according to the UDP, and send the data packet to the first terminal. The first terminal then verifies the data packet to generate the corresponding matching two-dimension codes, making the second terminal scan and analyze the matching two-dimension codes. The second terminal can scan the matching two-dimension codes of the first terminal to obtain the corresponding matching data. The second terminal then send the matching end command to the first terminal to prompt the first terminal that the current matching operation is end. Thus, the terminal matching method of the present disclosure can make the second terminal match the first terminal more quickly, not only reduce the intercommunication times between the first terminal and the second terminal, but also improve the matching efficiency between the first terminal and the second terminal.

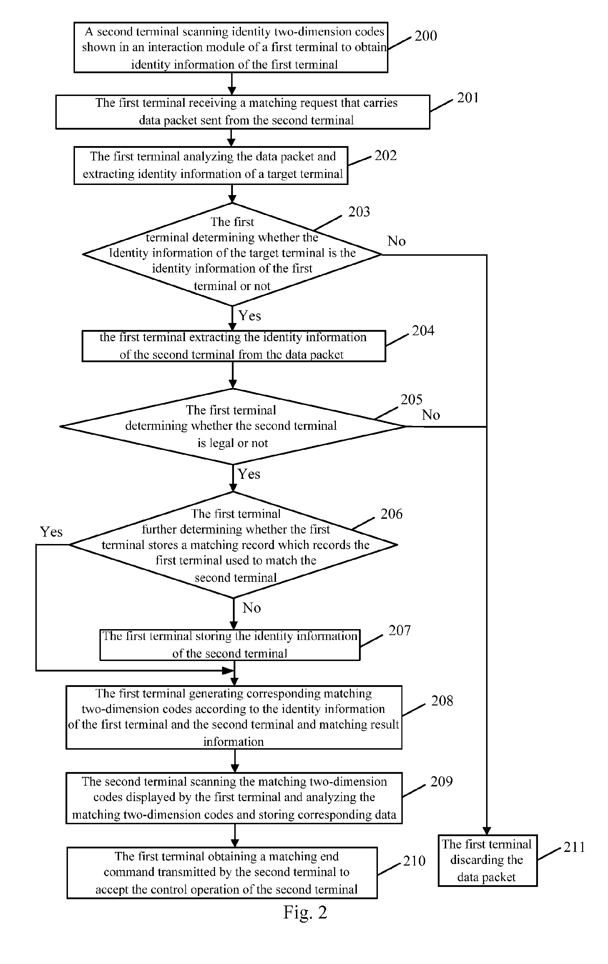

Referring to FIG. 2, FIG. 2 is a flowchart of a terminal matching method according to another embodiment of the present disclosure, and the terminal matching method in FIG. 2 is a further development on the basis of the terminal matching method in FIG. 1. A first terminal in the embodiments of the present disclosure can be, but not limited to: a smart television, a video player, a set-top box or other networking terminal devices, which has the function of generating two-dimension codes. Wherein, the first terminal can include: an interaction module and a background service module, the interaction module is configured to receive and send information, and the background service module is configured to verify the information and generate the two-dimension codes. As one embodiment of the present disclosure, the interaction module and the background service module can also be two separate devices, and the background service module and a second terminal can communicate with each other through the interaction module to achieve information interaction between the first terminal and the second terminal, so that the first terminal can match with the second terminal, that is, the background service module can interact with the second terminal through the interaction module to make the first terminal match the second terminal. The second terminal can be a networking mobile device which can identify the two-dimension codes.

As shown in FIG. 2, the terminal matching method according to another embodiment of the present disclosure may include steps as follows.

In step 200, a second terminal scanning identity two-dimension codes shown in an interaction module of a first terminal to obtain identity information of the first terminal.

In a specific implementation, the second terminal should be configured to have the function of identifying and analyzing two-dimension codes. Thus, after the second terminal scans the identity two-dimension codes shown in the interaction module of the first terminal, then the second terminal can obtain the identity information of the first terminal.

As a selectable way of the present disclosure, the identity two-dimension codes of the first terminal cannot only be showed through the interaction module, but also be showed on a house of the first terminal by means of printing or other ways, making a user find the identity information of the first terminal more conveniently.

In step 201, the first terminal receiving a matching request that carries data packet sent from the second terminal.

In a specific implementation of the present disclosure, after the second terminal receives the identity information of the first terminal, the second terminal packages the identity information of the first terminal and the second terminal into the data packet according to a user datagram protocol (UDP), and transmits the matching request that carries the data packet to the first terminal using a Socket protocol.

In the embodiment of the present disclosure, the second terminal widely sends the matching requests in a local area network (LAN), that is, the first terminal can receive the matching request transmitted by the second terminal, and other networking terminals in the LAN can also receive the matching requests transmitted by the second terminal.

In step 202, the first terminal analyzing the data packet and extracting identity information of a target terminal.

In a specific implementation, when the interaction module of the first terminal receives the matching request with the data packet that sent by the second terminal, the first terminal unpacks the data packet and obtains the identity information of the target terminal (i.e., the terminal to be matched).

In step 203, the first terminal determining whether the identity information of the target terminal is the identity information of the first terminal or not.

In a specific implementation, after the interaction module of the first terminal obtains the identity information of the target terminal, the interaction module then determines whether the identity information of the target terminal is the identity information of the first terminal or not. If the interaction module then determines that the identity information of the target terminal is the identity information of the first terminal, then step 204 is implemented; if the interaction module then determines that the identity information of the target terminal is not the identity information of the first terminal, then step 211 is implemented.

In step 204, the first terminal extracting the identity information of the second terminal from the data packet.

In a specific implementation, when the interaction module of the first terminal determines that the identity information of the target terminal of the data packet is the identity information of the first terminal, the interaction module of the first terminal extracts the identity information of the second terminal, and transmits the identity information of the second terminal to the background service module.

In step 205, the first terminal determining whether the second terminal is legal or not.

In the embodiment of the present disclosure, the first terminal can establish a database in advance to store the information of all terminals to be matched, that is, the first terminal includes a preset database which can store the information of all the terminals to be matched. If a kind of terminal can match the first terminal, this means that this kind of terminal if legal for the first terminal. When the background service module of the first terminal receives the identity information of the second terminal transmitted by the interaction module, the background service module of the first terminal determines whether the second terminal can match the first terminal or not. If the second terminal can match the first terminal, then step 206 is implemented; if the second terminal cannot match the first terminal, then the step 211 is implemented.

In step 206, the first terminal further determining whether the first terminal stores a matching record which records the first terminal used to match the second terminal.

In a specific implementation, when the second terminal can match the first terminal, the background service module of the first terminal continues to query whether the second terminal used to match with the first terminal or not. If the second terminal used to match with the first terminal, then step 208 is implemented; if the first terminal does not stores the matching record that records the first terminal used to match with the second terminal, that is, the second terminal does not match the first terminal, then step 207 is implemented.

In step 207, the first terminal storing the identity information of the second terminal.

In a specific implementation, when the second terminal does not match the first terminal as described in the step 206, the background service module of the first terminal stores the identity information of the second terminal, so that when the first terminal receives the matching request from the second terminal next time, the first terminal can directly generate the corresponding matching two-dimension codes, therefore avoiding repeating the above-mentioned steps and improving the matching efficiency.

In step 208, the first terminal generating corresponding matching two-dimension codes according to the identity information of the first terminal and the second terminal and matching result information.

In a specific implementation, when the background service module of the first terminal determines that the second terminal used to match with the first terminal, the background service module of the first terminal directly generates the matching two-dimension codes according to the identity information of the first terminal and second terminal and the matching result information, and sends the matching two-dimension codes to the interaction module to be displayed.

In the embodiment of the present disclosure, the matching result information can be matching success information or matching failure information.

In the embodiment of the present disclosure, if the first terminal malfunctions in the process of matching, then the matching failure information is added into the matching two-dimension codes when the matching two-dimension codes are generated by the first terminal to remind that the second terminal fails to match the first terminal; if the first terminal can be well matched with the second terminal, the matching success information is added into the matching two-dimension codes when the matching two-dimension codes are generated.

In step 209, the second terminal scanning the matching two-dimension codes displayed by the first terminal and analyzing the matching two-dimension codes and storing corresponding data.

In a specific implementation, after the second terminal scans the matching two-dimension codes, the second terminal stores the identity information of the first terminal and related contents of the control operation by the first terminal when the first terminal matches with the second terminal, so that when the second terminal needs to match with the first terminal next time, the second terminal can provide the user with related operation information. The related operation information may be: the second terminal having matched with the first terminal, or operation records that the second terminal controls for the first terminal.

In step 210, the first terminal obtaining a matching end command transmitted by the second terminal to accept the control operation of the second terminal.

In a specific implementation, when the second terminal analyzes the matching two-dimension codes and then obtains matching success or failure information, the second terminal transmits the matching end command to the first terminal.

If the information obtained by analyzing the matching two-dimension codes includes information of matching success, that is, the matching end command is a matching success command, then the first terminal receives the matching success command and resets, and accepts the control operation of the second terminal; If the information obtained by analyzing the matching two-dimension codes includes information of matching failure, that is, the matching end command is a matching failure command, then the second terminal fails to match with the first terminal, the first terminal receives the matching failure command and discards the data packet that has been received previous, and restores the original working condition.

In step 211, the first terminal discarding the data packet.

In a specific implementation, if the interaction module then determines that the identity information of the target terminal is not the identity information of the first terminal, or, if the second terminal cannot match the first terminal, the first terminal discards the data packet.

In the embodiment of the present disclosure, this step is applicable to unmatching terminals which do not match with other terminals. Since the second terminal widely transmits the matching requests which carry the data packet in the LAN, so each networking device in the LAN can receives the matching request sent by the second terminal. For the terminal that does not need to match with other terminals, the terminal can determine whether the identity information of the target terminal is consistent with its own identity information or not according to a received data packet. If the identity information of the target terminal is inconsistent with its own identity information, the terminal that does not need to match with other terminals discards the data packet and restores the original working condition, and does not need to further verify identity information, therefore improving the matching efficiency between terminals.

By using the terminal matching method as shown in FIG. 2 of the embodiment, the second terminal can scan the identity two-dimension codes of the first terminal to obtain the identity information of the first terminal, and package the identity information of the first terminal and the second terminal into the corresponding data packet according to the UDP, and send the data packet to the first terminal. The first terminal then verifies the data packet to generate the corresponding matching two-dimension codes, making the second terminal scan and analyze the matching two-dimension. The second terminal can scan the matching two-dimension codes of the first terminal to obtain the corresponding matching data. The second terminal then send the matching end command to the first terminal to prompt the first terminal that the current matching operation is end. Thus, the terminal matching method of the present disclosure can make the second terminal match the first terminal more quickly, not only reduce the intercommunication times between the first terminal and the second terminal, but also improve the matching efficiency between the first terminal and the second terminal.

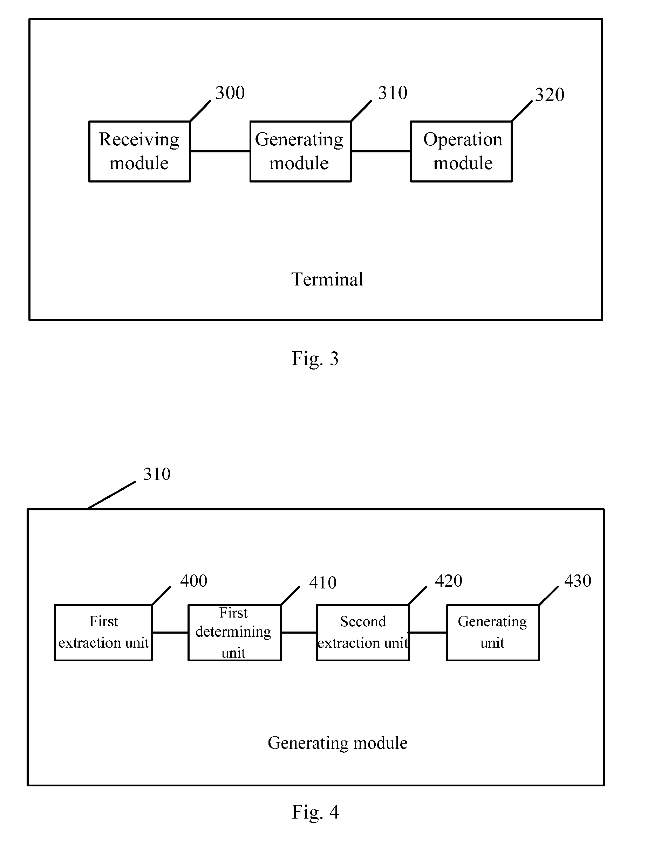

Referring to FIG. 3, FIG. 3 is a block diagram of a terminal according to one embodiment of the present disclosure. The terminal as shown in FIG. 3 includes: a receiving module 300, generating module 310 and an operation module 320.

The receiving module 300 is configured to receive a matching request that carries a data packet sent from a second terminal, wherein, the data packet includes identity information of a target terminal and identity information of the second terminal, and the identity information of the target terminal is obtained by means of scanning identity two-dimension codes of the target terminal by the second terminal.

The generating module 310 is configured to generate matching two-dimension codes according to the data packet to make the second terminal scan and analyze the matching two-dimension codes if the identity information of the target terminal is identified to be the identity information of the first terminal.

The operation module 320 is configured to obtain a matching end command transmitted from the second terminal to accept a control operation of the second terminal, wherein the matching end command is an instruction that is generated by the second terminal based on the matching two-dimension codes which have been analyzed.

By using the terminal as shown in FIG. 3 of the embodiment, the second terminal can scan the identity two-dimension codes of the first terminal to obtain the identity information of the first terminal, and package the identity information of the first terminal and the second terminal into the corresponding data packet, and send the data packet to the first terminal. The first terminal then verifies the data packet to generate the corresponding matching two-dimension codes, thus making the second terminal scan and analyze the matching two-dimension codes. The second terminal then scans the matching two-dimension codes of the first terminal to obtain the corresponding matching data. The second terminal then send the matching end command to the first terminal to prompt the first terminal that the current matching operation is end, which can make the second terminal match the first terminal more quickly, not only reducing the intercommunication times between the first terminal and the second terminal, but also improving the matching efficiency between the first terminal and the second terminal.

Referring to FIG. 4, FIG. 4 is a block diagram of a generating module of the terminal according to one embodiment of the present disclosure. The generating module 310 as shown in FIG. 4 includes: a first extraction unit 400, a first determining unit 410, a second extraction unit 420 and a generating unit 430.

The first extraction unit 400 is configured to analyze the data packet and extract the identity information of the target terminal.

The first determining unit 410 is configured to determine whether the identity information of the target terminal is the identity information of the first terminal or not.

The second extraction unit 420 is configured to extract the identity information of the second terminal from the data packet when the first determining unit 410 determines that the identity information of the target terminal is the identity information of the first terminal.

The generating unit 430 is configured to generate corresponding matching two-dimension codes according to the identity information of the first terminal and the second terminal and matching result information. Wherein, the matching result information can be matching success information or matching failure information.

By using the generating module as shown in FIG. 4, the first terminal can match the second terminal one-to-one, and other terminals can also receive the data packet even if the other terminal do not need to match with the second terminal. The first terminal can determine whether or not the target terminal needs to match with the second terminal according to the identity information of the target terminal, when the target terminal needs to match with the second terminal, the first terminal extracts the identity information of the second terminal from the data packet, and generates the matching two-dimension codes according to the identity information of the first terminal and the matching result information. Thus, the matching process of the terminals is convenient and concise and has a high efficiency.

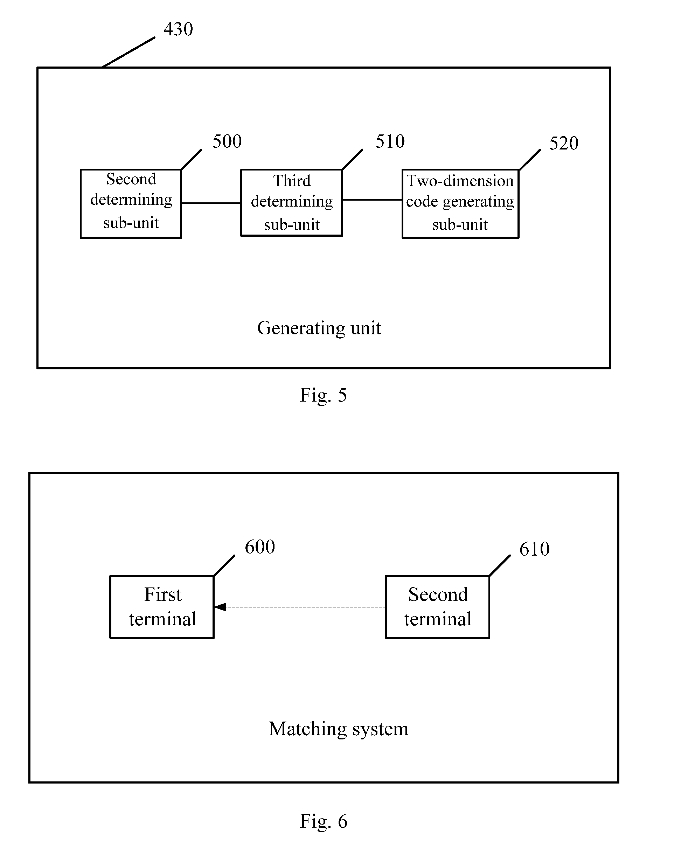

Referring to FIG. 5, FIG. 5 is a block diagram of a generating unit of the generating module of the terminal according to one embodiment of the present disclosure. The generating unit 430 as shown in FIG. 5 includes: a second determining sub-unit 500, a third determining sub-unit 510 and a two-dimension code generating sub-unit 520.

The second determining sub-unit 500 is configured to determine whether the second terminal is legal or not.

The third determining sub-unit 510 is configured to determine whether the first terminal stores a matching record which records the first terminal used to match the second terminal when the second determining sub-unit 500 determines that the second terminal can match the first terminal.

The two-dimension code generating sub-unit 520 is configured to, when the second terminal does not match the first terminal, store the identity information of the second terminal and generate corresponding matching two-dimension codes according to the identity information of the first terminal and the second terminal and matching result information. Wherein, the matching result information can be matching success information or matching failure information.

By using the generating unit as shown in FIG. 5 of the embodiment, the first terminal can verify the second terminal, if first terminal never matches with the second terminal, that is ,there is no matching record between the first terminal and the second terminal, then the first terminal stores the matching record which proves that the second terminal used to match with the first terminal, so that corresponding verification steps can be omitted when the second terminal needs to match with the first terminal next time, which improves the matching efficiency.

Referring to FIG. 6, FIG. 6 is a block diagram of a matching system according to one embodiment of the present disclosure. The matching system as shown in FIG. 6 includes: a first terminal 600 and a second terminal 610.

The first terminal 600 is configured to receive a matching request that carries a data packet sent from the second terminal 610, and generate matching two-dimension codes according to the data packet to make the second terminal 610 scan and analyze the matching two-dimension codes if the first terminal 600 determines that the identity information of the target terminal is the identity information of the first terminal 600, and obtain a matching end command transmitted from the second terminal 610 to accept a control operation of the second terminal 610, wherein, the data packet includes identity information of a target terminal and identity information of the second terminal 610, and the identity information of the target terminal can be obtained by means of scanning identity two-dimension codes of the target terminal by the second terminal 610, the matching end command is an instruction that is generated by the second terminal 610 based on the matching two-dimension codes which have been analyzed.

The second terminal 610 is configured to scan the identity two-dimension codes of the first terminal 600 to obtain the identity information of the first terminal 600, and transmit the matching request that carries the data packet to the first terminal 600, and scan and analyze the matching two-dimension codes generated by the first terminal 600 according to the data packet, and transmit a matching end command to the first terminal 600, wherein, the data packet includes the identity information of the first terminal 600 and the second terminal 610, and the matching end commend is generated according to the matching two-dimension codes which have been analyzed.

In one embodiment of the present disclosure, the first terminal 600 is further configured to analyze the data packet and extract the identity information of the target terminal, and determine whether the identity information of the target terminal is the identity information of the first terminal 600, and extract the identity information of the second terminal 610 from the data packet if the identity information of the target terminal is the identity information of the first terminal 600, and generate the matching two-dimension codes according to the identity information of the first terminal 600 and the second terminal 610 and matching result information.

By using the matching system as shown in FIG. 6 of the embodiment, the second terminal can scan the identity two-dimension codes of the first terminal to obtain the identity information of the first terminal, and package the identity information of the first terminal and the second terminal into the corresponding data packet, and send the data packet to the first terminal. The first terminal then verifies the data packet to generate the corresponding matching two-dimension codes, thus making the second terminal scan and analyze the matching two-dimension codes. The second terminal then scans the matching two-dimension codes of the first terminal to obtain the corresponding matching data. The second terminal then send the matching end command to the first terminal to prompt the first terminal that the current matching operation is end, which can make the second terminal match the first terminal more quickly, not only reducing the intercommunication times between the first terminal and the second terminal, but also improving the matching efficiency between the first terminal and the second terminal.

By the above described embodiments, the terminal is only s schematic device, units described as separate components can be physically separated or not, components described as display units can be physical units or not. A person having ordinary skills in the art can clearly understand how to achieve the above embodiments by means of software plus necessary universal hardware platforms. The above embodiments can be implemented by hardware, but in many cases the former is a better. Based on such understanding, the technical nature of the above embodiments or the part of the above embodiments different from the prior art may be embodied in the form of a software product. The computer software product is stored in a storage medium. The storage medium includes a plurality of instructions to make a computer device (may be a personal computer, a server, or network equipment, etc.) implement the method according to each of the above embodiments.

The person having ordinary skills in the art can understand the modules of the above embodiments are distributed in the device according to the description of the embodiments. The modules of the above embodiments can also be changed to be located in one or multiple device of other different embodiments from the embodiment. The modules or units of the above embodiments can be combined into one module, or may be further split into a plurality of sub-modules. The steps of the method of the above embodiments can be adjusted, combined and cut according to the actual needs.

The modules or units of the above embodiments can be realized by using general integrated circuits (such as the central processing units), or application-specific integrated circuits (ASIC).

A person having ordinary skills in the art can realize that part or whole of the processes in the methods according to the above embodiments may be implemented by a computer program instructing relevant hardware. The program may be stored in a computer readable storage medium. When executed, the program may execute processes in the above-mentioned embodiments of methods. The storage medium may be a magnetic disk, an optical disk, a Read-Only Memory (ROM), a Random Access Memory (RAM), et al.

Although certain embodiments of the present disclosure have been specifically described, the present disclosure is not to be construed as being limited thereto. Various changes or modifications may be made to the present disclosure without departing from the scope and spirit of the present disclosure.

## Claims

1. A terminal matching method, comprising:
a first terminal receiving a matching request that carries a data packet sent from a second terminal, wherein, the data packet includes identity information of a target terminal and identity information of the second terminal, and the identity information of the target terminal is obtained by means of scanning identity two-dimension codes of the target terminal by the second terminal;
the first terminal generating matching two-dimension codes according to the data packet to make the second terminal scan and analyze the matching two-dimension codes if the first terminal identifies that the identity information of the target terminal is the identity information of the first terminal; and
the first terminal obtaining a matching end command transmitted from the second terminal to accept a control operation of the second terminal, wherein the matching end command is an instruction that is generated by the second terminal based on the matching two-dimension codes which have been analyzed.

2. The terminal matching method of claim 1, wherein the step that if the first terminal identifies that the identity information of the target terminal is the identity information of the first terminal, comprises:
the first terminal analyzing the data packet and extracting identity information of a target terminal;
the first terminal determining whether the identity information of the target terminal is the identity information of the first terminal or not; and
the first terminal extracting the identity information of the second terminal from the data packet if the identity information of the target terminal is the identity information of the first terminal.

3. The terminal matching method of claim 2, wherein the step of the first terminal generating matching two-dimension codes according to the data packet, comprises:
the first terminal generating corresponding matching two-dimension codes according to the identity information of the first terminal and the second terminal and matching result information.

4. The terminal matching method of claim 3, wherein the step of the first terminal generating corresponding matching two-dimension codes according to the identity information of the first terminal and the second terminal and matching result information, comprises:
the first terminal determining whether the second terminal is legal or not;
the first terminal determining whether the first terminal stores a matching record which records the first terminal used to match the second terminal if the second terminal can match the first terminal; and
the first terminal storing the identity information of the second terminal and generating corresponding matching two-dimension codes according to the identity information of the first terminal and the second terminal and matching result information if the first terminal does not stores the matching record that records the first terminal used to match with the second terminal.

5. A terminal, comprising:
a receiving module, configured to receive a matching request that carries a data packet sent from a second terminal, wherein, the data packet includes identity information of a target terminal and identity information of the second terminal, and the identity information of the target terminal is obtained by means of scanning identity two-dimension codes of the target terminal by the second terminal;
a generating module, configured to generate matching two-dimension codes according to the data packet to make the second terminal scan and analyze the matching two-dimension codes if the identity information of the target terminal is identified to be the identity information of the first terminal; and
a operation module, configured to obtain a matching end command transmitted from the second terminal to accept a control operation of the second terminal, wherein the matching end command is an instruction that is generated by the second terminal based on the matching two-dimension codes which have been analyzed.

6. The terminal of claim 5, wherein the generating module comprises:
a first extraction unit, configured to analyze the data packet and extract the identity information of the target terminal;
a first determining unit, configured to determine whether the identity information of the target terminal is the identity information of the first terminal or not; and
a second extraction unit, configured to extract the identity information of the second terminal from the data packet when the first determining unit determines that the identity information of the target terminal is the identity information of the first terminal.

7. The terminal of claim 6, wherein the generating module further comprises:
a generating unit, configured to generate corresponding matching two-dimension codes according to the identity information of the first terminal and the second terminal and matching result information, wherein, the matching result information is matching success information or matching failure information.

8. The terminal of claim 7, wherein the generating unit comprises:
a second determining sub-unit, configured to determine whether the second terminal is legal or not.
a third determining sub-unit, configured to determine whether the first terminal stores a matching record which records the first terminal used to match the second terminal when the second determining sub-unit determines that the second terminal can match the first terminal; and
a two-dimension code generating sub-unit, configured to, when the second terminal does not match the first terminal, store the identity information of the second terminal and generate corresponding matching two-dimension codes according to the identity information of the first terminal and the second terminal and matching result information.

9. A matching system, comprising: a first terminal and a second terminal;
the first terminal, configured to receive a matching request that carries a data packet sent from the second terminal, and generate matching two-dimension codes according to the data packet to make the second terminal scan and analyze the matching two-dimension codes if the first terminal determines that the identity information of the target terminal is the identity information of the first terminal, and obtain a matching end command transmitted from the second terminal to accept a control operation of the second terminal, wherein, the data packet includes identity information of a target terminal and identity information of the second terminal, and the identity information of the target terminal is obtained by means of scanning identity two-dimension codes of the target terminal by the second terminal, the matching end command is an instruction that is generated by the second terminal based on the matching two-dimension codes which have been analyzed; and
the second terminal, configured to scan the identity two-dimension codes of the first terminal to obtain the identity information of the first terminal, and transmit the matching request that carries the data packet to the first terminal, and scan and analyze the matching two-dimension codes generated by the first terminal according to the data packet, and transmit a matching end command to the first terminal, wherein, the data packet includes the identity information of the first terminal and the second terminal, and the matching end commend is generated according to the matching two-dimension codes which have been analyzed.

10. The matching system of claim 9, the first terminal further configured to analyze the data packet and extract the identity information of the target terminal, and determine whether the identity information of the target terminal is the identity information of the first terminal, and extract the identity information of the second terminal from the data packet if the identity information of the target terminal is the identity information of the first terminal, and generate the matching two-dimension codes according to the identity information of the first terminal and the second terminal and matching result information.
